Europäisches Patentamt

European Patent Office

Office européen des brevets

(11) Veröffentlichungsnummer: **0 285 075 B1**

# EUROPÄISCHE PATENTSCHRIFT

(45) Veröffentlichungstag der Patentschrift: **16.10.91**

(21) Anmeldenummer: **88105001.7**

(22) Anmeldetag: **28.03.88**

(51) Int. Cl.5: **B05D 7/14**, B05B 13/00, B25J 9/00, G05B 19/19

(54) **Verfahren zum selbsttätigen Beschichten von Werkstücken.**

(30) Priorität: **02.04.87 DE 3711020**

(43) Veröffentlichungstag der Anmeldung:
**05.10.88 Patentblatt 88/40**

(45) Bekanntmachung des Hinweises auf die
Patenterteilung:
**16.10.91 Patentblatt 91/42**

(84) Benannte Vertragsstaaten:
**BE DE ES FR GB IT SE**

(56) Entgegenhaltungen:
EP-A- 0 091 663          EP-A- 0 129 853
DE-A- 3 301 022          DE-A- 3 526 958
US-A- 4 604 026          US-E- 32 151

(73) Patentinhaber: **Behr Industrieanlagen GmbH & Co.**
**Rosenstrasse 39**
**W-7120 Bietigheim-Bissingen(DE)**

(72) Erfinder: **Handke, Heinz**
**Fasanenweg 8**
**W-7121 Gemrigheim(DE)**
Erfinder: **Rothenburger, Hermann**
**Holderstrasse 10**
**W-7121 Erligheim(DE)**

(74) Vertreter: **Heusler, Wolfgang, Dipl.-Ing. et al**
**Dr. Dieter von Bezold Dipl.-Ing. Peter Schütz**
**Dipl.-Ing. Wolfgang Heusler Brienner Strasse 52**
**W-8000 München 2(DE)**

Rank Xerox (UK) Business Services

## Beschreibung

Die Erfindung betrifft ein Verfahren gemäß dem Oberbegriff des Anspruchs 1.

Serienweise zu beschichtende Werkstücke wie z.B. die Rohkarossen von Kraftfahrzeugen werden von Boden- oder Hängefördereinrichtungen durch eine Sprühkabine geführt, in der sich durch ein gespeichertes Bearbeitungs- und Bewegungsprogramm gesteuerte Lackierroboter od. dgl. befinden können. Das Bewegungsprogramm kann bekanntlich durch eine Teach-in-Methode erstellt werden, bei der eine Vielzahl von Farbauftreffpunkten der Karosse bestimmt wird, die von dem Roboter im Betrieb nacheinander angefahren werden. Zweckmässig erfolgt die Beschichtung während einer kontinuierlichen Förderbewegung der Karossen durch die Sprühkabine, so daß die Sprühvorrichtung des Roboters nicht nur relativ zu der zu beschichtenden Karosse, sondern auch parallel zur Bewegung der Fördereinrichtung bewegt wird.

Bei derartigen Beschichtungsverfahren besteht die Möglichkeit, daß z.B. bei Stromausfall , in Notfällen oder aus sonstigen Gründen selbsttätig oder von Hand der programmgesteuerte Beschichtungsbetrieb unterbrochen wird und der Roboter sowie die Fördereinrichtung stillgesetzt werden. In einem solchen Fall war es bisher nicht möglich, die Beschichtung nach Beseitigung der Unterbrechungsursache einfach durch Wiederaufnahme des Programms fortzusetzen, da sowohl die Fördereinrichtung als auch der Lackierroboter nach dem Abschalten aufgrund ihrer Eigenträgheit in undefinierten Endpositionen stehenbleiben und die sich dadurch ergebende neue Relativposition zwischen Sprühvorrichtung und Karosse nicht mehr in definiertem Zusammenhang mit dem unterbrochenen Programm stand.

Selbst wenn man die Sprühvorrichtung von Hand wieder ungefähr in die Relativposition bringen würde, bei der die Beschichtung unterbrochen wurde, wäre eine selbsttätige Fortsetzung des Beschichtungsbetriebs nicht möglich, da der zuletzt durch die Programmsteuerung angefahrene genaue Farbauftreffpunkt an der Karosse unbekannt ist. Aus diesen Gründen wurden bisher die erst teilweise beschichteten Karossen nicht fertig bearbeitet, sondern als Ausschuß entfernt. Die Unterbrechung betriff in der Regel nicht nur eine, sondern mehrere gleichzeitig beschichtete Karossen.

Der Erfindung liegt die Aufgabe zugrunde, ein Verfahren anzugeben, das es ermöglicht, bei unplanmäßigen Unterbrechungen des Beschichtungsbetriebes das abgebrochene Bearbeitungsprogramm an der Unterbrechungsstelle fortzusetzen, also das teilweise beschichtete Werkstück selbsttätig fertigzustellen.

Diese Aufgabe wird durch das im Anspruch 1 gekennzeichnete Verfahren gelöst.

Am Beispiel der Beschichtung von Kraftfahrzeugkarossen mit einen Lackierroboter wird die Erfindung erläutert. Die zu beschichtenden Karossen werden hierbei im Durchlaufbetrieb auf einem Förderer üblicher Art durch eine Sprühkabine bewegt, wobei die Position der Karosse längs der Förderbahn kontinuierlich durch einen sogenannten Bandgeber ermittelt wird. Der beispielsweise aus einem Resolver od. dgl. bestehende Bandgeber erzeugt zu diesem Zweck ausgehend von einer Referenzposition (Nullposition) in an sich bekannter Weise für von der Karosse zurückgelegte Wegeinheiten jeweils Impulse (z.B. 10 Impulse für jeden mm), mit denen auch eine gleichzeitige Bewegung des Roboters auf einer "7. Achse" längs der Transportbewegungsbahn synchronisiert und gesteuert wird. Weitere Positionsgeber können diese Gesamtbewegung des Roboters und dessen Bewegungen um seine anderen 6 Achsen melden.

Bei unplanmäßigem Abschalten der Anlage etwa durch automatische oder versehentliche Betätigung eines Not- oder sonstigen Schalters wird in der Regel der Sprühvorgang nahezu sofort unterbrochen. Der Förderer und somit die Karosse und auch der längs der Förderbahn bewegte Roboter werden zwar sofort abgebremst, setzen aber ihre Bewegungen aufgrund ihrer eigenen Trägheit fort, bis sie an irgendwelchen nicht genau vorherbestimmbaren Positionen stehen bleiben, wobei die Nachlaufstrecken von Förderer und Roboter gewöhnlich voneinander abweichen. Auch zum Zeitpunkt der Abschaltung in Bewegung befindliche Glieder des Roboters und somit die Sprühvorrichtung werden sich um die betreffenden Roboterachsen weiterbewegen und in willkürlichen Stellungen stehen bleiben.

Die Endstellungen des Förderers und des Roboters werden aber durch den jeweiligen Stand des erwähnten Bandgebers bzw. der Positionsgeber des Roboters gemeldet und in Form elektrischer Signale gespeichert. Zuvor war auch der zum Zeitpunkt der Abschaltung gerade erreichte Stand gespeichert worden. Die gespeicherten Signale werden nun einem Rechner zugeführt, der hieraus unter Berücksichtigung der Steuerdaten des Bearbeitungsprogramms einen Bewegungsweg errechnet, auf dem der Roboter zu der Position relativ zu der Karosse gefahren werden kann, die er bei der Abschaltung der Anlage hatte. Allerdings ist diese Relativposition für einen erneuten Sprühbeginn in der Regel nicht geeignet, weil es sich nicht um einen der im Bearbeitungsprogramm vorgesehenen Farbauftreffpunkte der Karosse handelt, die bei der Programmierung des Roboters im üblichen Teach-in-Verfahren definiert werden. Das Steuersystem kennt aber die definierten Farbauftreffpunkte, die sich in der Reihenfolge des Programmablaufs vor und nach der Unterbrechungsstelle befinden, und zu einem dieser beiden Punkte wird der Roboter gefahren. Wenn es zweckmäßiger ist, einzelne Stellen der Karosse eher zu wenig als doppelt zu beschichten, beginnt der erneute Beschichtungsbetrieb vorzugsweise an dem zweitgenannten Punkt.

Die erläuterte Wiederaufnahme des Programmbetriebs kann durch das Bedienungspersonal beispielsweise durch Handbetätigung eines Wiederstartschalters eingeleitet werden, nachdem zuvor die Ursache der Notabschaltung ermittelt und ggf. beseitigt wurde. Unter Umständen kann die Roboterhand mit der Sprühvorrichtung aber während der Auslaufbewegungen eine Endstellung erreicht haben, aus der sie durch das errechnete Bewegungsprogramm nicht ohne weiteres, insbesondere nicht ohne Anstoßen an Teilen der Karosse, in die ursprüngliche Relativposition gefahren werden kann. In diesem Fall wird der Roboter zunächst durch Handsteuerbetrieb in eine günstigere Zwischenposition gefahren, wobei die vorläufigen Bewegungsinformationen selbsttätig dem Steuerrechner zugeführt werden, der dann für die endgültige Rückführbewegung in die ursprüngliche Relativposition sorgt.

Bei der Verwendung einer parallel zu der Förderbahn fahrbaren Sprühvorrichtung ist es zweckmäßiger, nach der Bewegungsunterbrechung die Sprühvorrichtung zum Erreichen der vorherigen Position relativ zu dem Werkstück längs der Förderbahn zu bewegen, statt die Fördereinrichtung an die Stelle zurückzufahren, an der sie sich bei der Unterbrechung befunden hatte. In anderen Fällen, insbesondere bei ortsfester Sprühvorrichtung, kann aber auch die Fördereinrichtung und damit das Werkstück zurückbewegt werden.

**Patentansprüche**

1. Verfahren zum selbsttätigen Beschichten von Werkstücken, die von einer Fördereinrichtung einer relativ zu der Fördereinrichtung unter Steuerung durch ein gespeichertes Bearbeitungsprogramm bewegbaren Sprühvorrichtung, insbesondere einem Lackierroboter od. dgl., zugeführt werden,

   wobei die Möglichkeit besteht, daß die Beschichtung und die Bewegungen vor Beendigung des Bearbeitungsprogramms notfalls oder unprogrammgemäß unterbrochen werden, **dadurch gekennzeichnet,**
   daß bei der vorzeitigen Bewegungsunterbrechung der aktuelle Status des Bearbeitungsprogramms gespeichert wird und die örtlichen Positionen der Sprühvorrichtung und der Fördereinrichtung zur Zeit der Beschichtungsunterbrechung sowie nach Beendigung der Bewegungen festgestellt werden,
   daß die Sprühvorrichtung und/oder die Fördereinrichtung auf einer aufgrund der festgestellten örtlichen Positionen selbsttätig ermittelten Bewegungsbahn in die vorherige Position relativ zueinander bewegt werden, in der sie sich bei Unterbrechung der Beschichtung befunden hatten,
   und daß dann das Bearbeitungsprogramm von der unterbrochenen Stelle an ausgeführt wird.

2. Verfahren nach Anspruch 1, **dadurch gekennzeichnet,** daß nach der Bewegungsunterbrechung die Sprühvorrichtung zum Erreichen der vorherigen Position relativ zu dem Werkstück längs der Bewegungsbahn der Fördereinrichtung bewegt wird.

3. Verfahren nach Anspruch 1 oder 2, **dadurch gekennzeichnet,** daß die Endposition der Fördereinrichtung mit einem Bandzähler festgestellt wird.

4. Verfahren nach einem der vorangehenden Ansprüche, **dadurch gekennzeichnet,** daß nach der Bewegungsunterbrechung die Sprühvorrichtung durch Handsteuerung auf eine Zwischenposition gefahren wird, von der aus sie dann selbsttätig in die vorherige Position relativ zu dem Werkstück bewegt wird.

5. Verfahren nach einem der vorangehenden Ansprüche, **dadurch gekennzeichnet,** daß das Bearbeitungsprogramm Steuerdaten für die Beschichtung einer Vielzahl einzelner definierter Farbauftreffpunkte des Werkstücks enthält, die während der Programmdurchführung der Reihe nach von der Sprühvorrichtung angefahren werden, und daß die Sprühvorrichtung nach der Bewegungsunterbrechung bis zu dem letzten vor der Unterbrechung erreichten Farbauftreffpunkt bewegt wird.

6. Verfahren nach einem der vorangehenden Ansprüche, **dadurch gekennzeichnet,** daß die Beschichtung nach der Unterbrechung bei dem ersten Farbauftreffpunkt beginnt, der gemäß der programmierten Beschichtungsfolge nach der Unterbrechungsstelle vorgesehen ist.

**Claims**

1. Method for automatic coating of workpieces which are fed by a conveying device to a spraying device which is movable relative to the conveying device under control by a stored processing programme, particularly a painting robot or the like,

there being the possibility of the coating and the movements being interrupted of necessity or in an unscheduled manner before the processing programme is finished,
characterised in that
in the event of a premature interruption of the movements the actual status of the processing programme is stored and the locations of the spraying device and the conveying device are determined at the time of the interruption in the coating and at the termination of the movements,
that the spraying device and/or the conveying device are moved with respect to one another over a movement path automatically determined on the basis of the established locations into the previous position at which they were located when the coating was interrupted,
and that the processing programme is then carried on from the location of the interruption.

2. Method as claimed in claim 1, characterised in that after the interruption of the movements the spraying device is moved relative to the workpiece along the movement path of the conveying device in order to reach the previous position.

3. Method as claimed in claim 1 or 2, characterised in that the final position of the conveying device is determined with a tape counter.

4. Method as claimed in one of the preceding claims, characterised in that after the interruption of the movements the spraying device is moved by manual control to an intermediate position from which it is then moved automatically into the previous position relative to the workpiece.

5. Method as claimed in one of the preceding claims, characterised in that the processing programme includes control data for the coating of a plurality of individual defined paint impact points on the workpiece which are passed sequentially by the spraying device during execution of the programme and that after the interruption of the movements the spraying device is moved to the last paint impact point reached before the interruption.

6. Method as claimed in one of the preceding claims, characterised in that after the interruption the coating begins at the first paint impact point which is provided in accordance with the programmed coating sequence after the location of the interruption.

**Revendications**

1. Procédé pour le revêtement automatique de pièces à traiter, qui sont amenées par un dispositif transporteur à un dispositif de pulvérisation, notamment un robot de peinture ou l'analogue, pouvant être déplacé par rapport au dispositif transporteur à l'aide d'une commande comportant un programme de travail enregistré, ce procédé permettant également d'interrompre le revêtement et les mouvements avant la fin du programme de travail, en cas de nécessité ou non conformément au programme, caractérisé en ce que, lors de l'interruption prématurée des mouvements, l'état actuel du programme de travail est enregistré et les positions locales du dispositif de pulvérisation et du dispositif transporteur au moment de l'interruption du revêtement ainsi qu'après la fin du mouvement sont constatées, en ce que le dispositif de pulvérisation et/ou le dispositif transporteur sont déplacés l'un par rapport à l'autre sur un trajet de déplacement calculé automatiquement en fonction des positions locales constatées, et ramenées dans la position antérieure dans laquelle ils se trouvaient lors de l'interruption du revêtement, et en ce que le programme de travail se déroule alors à partir de l'endroit de l'interruption.

2. Procédé selon la revendication 1, caractérisé en ce que, après l'interruption des mouvements, le dispositif de pulvérisation est déplacé par rapport à la pièce à traiter le long du trajet de déplacement du dispositif transporteur, pour atteindre la position antérieure.

3. Procédé selon la revendication 1 ou 2, caractérisé en ce que la position terminale du dispositif transporteur est déterminée par un compteur à bande.

4. Procédé selon l'une des revendications précédentes, caractérisé en ce que, après l'interruption des mouvements, le dispositif de pulvérisation est amené, par commande manuelle, à une position intermédiaire, à partir de laquelle il est alors ramené automatiquement à la position antérieure par rapport à la pièce à traiter.

5. Procédé selon l'une des revendications précédentes, caractérisé en ce que le programme de travail contient des données de commande pour le revêtement d'une multiplicité de points d'application de la couleur sur la pièce à traiter, définis individuellement, dont le dispositif de pulvérisation s'approche successivement pendant le déroulement du programme, et en ce que, après l'interruption des mouvements, le dispositif de pulvérisation est amené jusqu'au dernier point d'application de peinture atteint avant l'interruption.

6. Procédé selon l'une des revendications précédentes, caractérisé en ce que, après l'interruption, le revêtement commence au premier point d'application de peinture qui est prévu, selon la séquence de revêtement programmée, après l'endroit de l'interruption.